# EUROPEAN PATENT SPECIFICATION

(11) **EP 1 707 780 B1**
(45) Date of publication and mention of the grant of the patent: **30.03.2011**
(21) Application number: 06111622.4
(22) Date of filing: 23.03.2006
(51) Int. Cl.: F02D 9/10, F16K 1/226

(54) **Shutter-type regulation device, multi-way part comprising such devices and production process**
Drosselklapperegelvorrichtung, Mehrwegeteil mit solchen Vorrichtungen und Herstellungsverfahren
Dispositif de régulation à clapet, pièce multicanaux comportant de tels dispositifs et procédé de réalisation.

(30) Priority: 24.03.2005 FR 0502944
(43) Date of publication of application: 04.10.2006
(73) Proprietor: MARK IV SYSTEMES MOTEURS (SAS), 92300 Levallois Perret (FR)
(72) Inventor: Menin, Denis, 68125 Houssen (FR)
(74) Representative: Nuss, Laurent

(56) References cited:
- EP-A- 0 708 232
- EP-A- 0 821 148
- DE-A1- 19 500 344
- GB-A- 2 393 219

## Description

The present invention relates to the field of fluid flow regulation, preferably gaseous fluid flow regulation, in terms of flow rate or pressure loss, and relates to a regulation device for a conduit portion, a multi-port or multi-way part comprising a plurality of such devices, and to a process for producing one or more such regulation devices.

In a general manner, the present invention relates to the regulation devices of the "shutter" type, in which a pivoting shutter is fitted in a conduit portion or similar. Said shutter may be pivoted between, on the one hand, a totally open position in which it is arranged perpendicular to the local transverse section plane of the conduit portion (it is presented edgewise in the flow direction of the fluid/minimum obstruction / minimum pressure loss / maximum permitted flow rate) and, on the other hand, a totally closed position in which it blocks, possibly totally, the passage in the region of the conduit portion by being for example arranged in the same plane as the local transverse section plane (maximum apparent surface area in the flow direction of the fluid/maximum obstruction/maximum pressure loss/ minimum flow rate).

Such a pivoting shutter-type regulation device basically consists, in a known manner, on the one hand, of two bearings formed or fitted in two opposing housing orifices arranged in the wall of said conduit portion, on the other hand, of a generally planar pivoting shutter body mounted between said two bearings and capable of closing the passage of the conduit portion and, finally, of a control spindle of non-circular section traversing the two bearings and on which the shutter body is fitted by a central tubular part.

These known shutter-type regulation devices may, roughly, be classified into two categories.

First of all there are those of a relatively complex construction, formed from many components, that are relatively tiresome to assemble and have a high production cost, but provide precise regulation, a good seal in the closed state in the flow direction and a good seal in the region of the bearings, while limiting the frictional forces in the region of said bearings.

Then there are those of simple construction, generally reduced to the shutter and the control rod, that are easy to assemble and have a low production cost, but do not provide a good quality seal either in the fluid flow direction or in the region of the bearings, and that may be subject to jamming or blockages in rotation because of defective guidance in rotation of the rod.

DE 19 500 334 discloses a regulation device according to the preamble of claim 1.

EP 0 821 148 discloses a shutter valve for controlling a gas flow through a vehicle exhaust pipe, comprising a disc rotating inside the pipe by two opposed pivots set in sockets in the pipe wall.

The main purpose of the present invention is to improve the regulation device according to DE 19 500 334 so as to increase its rigidity and its sealing performances.

Therefore, the regulation device according to the invention also shows the feature of the characterising part of claim 1.

The invention will be better understood with the aid of the description below which relates to a preferred embodiment, given as a non-limiting example, and explained with reference to the accompanying diagrammatic drawings, in which:
Fig. 1 is a view in partial section in the plane of the control spindle of a regulation device according to the invention, forming part of a multi-port part;
Fig. 2 is a view in section of a multi-port part showing the different consecutive phases of fitting a regulation device according to the invention, these phases being illustrated by four devices each represented in a different assembly phase;
Figs. 3A to 3C are views, respectively from above, in side elevation and in section along A-A, on a different scale, of a bearing element and a shutter body (in the unassembled state) forming part of the device according to the invention;
Figs. 4A to 4C are views in perspective illustrating the successive phases of assembly and locking of a shutter body between two bearing elements with a view to forming a device according to the invention;
Fig. 5 is a view in perspective of the subject of Fig. 2;
Fig. 6 is a view in perspective in a different direction from those of Figs. 2 and 5 of a multi-port part according to the invention.
Fig. 7 is a partial view in perspective of a part of an inlet manifold or distributor comprising a multi-port part according to Figs. 5 and 6, and,
Fig. 8 is a view in section in a plane containing the control spindle of a manifold comprising a multi-port part according to Figs. 5 and 6.

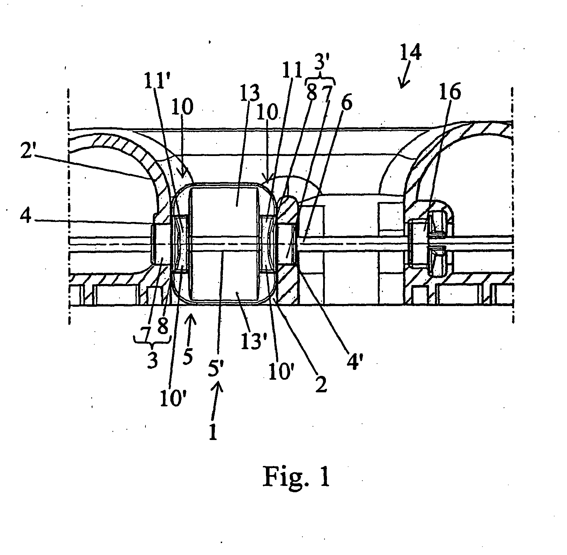

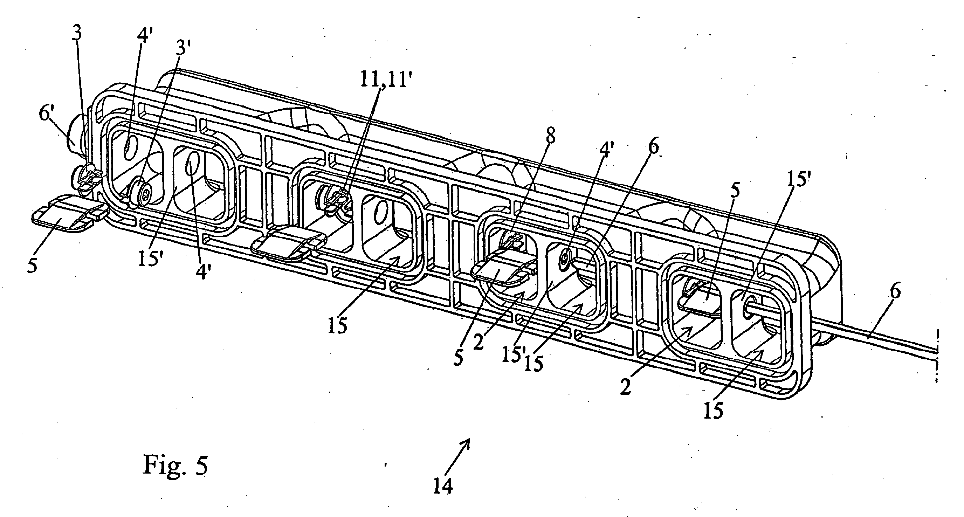

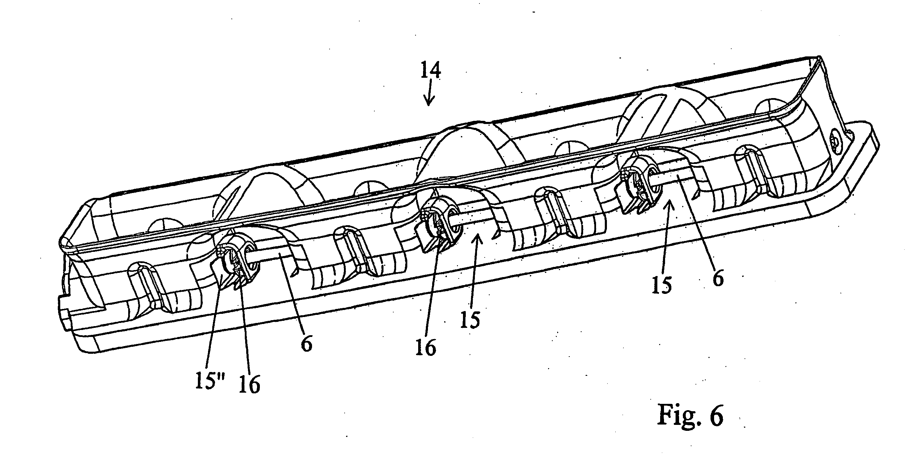

As shown in Figs. 1, 2, 5, 6 and 7 of the accompanying figures, the or each regulation device 1 basically consists, on the one hand, of two bearings 3 and 3' formed or mounted in two opposing housing orifices 4 and 4', arranged in the wall 2' of a conduit portion 2 in which the flow must be regulated, on the other hand, of a pivoting, generally flat, shutter body 5 mounted between said two bearings 3 and 3' and capable of closing the passage of the conduit portion 2 and, finally, of a control spindle 6 of non-circular section traversing the two bearings 3 and 3' and on which the shutter body 5 is fitted by a central tubular part 5'.

Each bearing consists of a bearing element 3, 3' in a single piece that comprises a first part 7 forming the body of the bearing and fitted tightly and with the ability to rotate in one of the housing orifices 4, 4' and a second part 8 forming a support head situated in the conduit portion 2, resting against the internal face of the wall 2' thereof round the housing orifice 4, 4' concerned and having a traversing groove 9 forming a planar runner, and in that the shutter body 5 is assembled with the two opposite bearing elements 3 and 3' by the engagement of the parts 10' of the opposite side portions 10 in the grooves 9 forming runners of the support heads 8 of those two bearing elements 3 and 3', said assembly being locked by the control spindle 6 traversing them.

According to the invention, and as shown in particular in Figs. 1, 2, 3 and 4 of the accompanying drawings, the support head 8 of each bearing element 3, 3' comprises, on the one hand, two walls or two pairs of wall portions 11, 11' defining, between them, two straight aligned groove parts 9, 9" forming the runner and situated symmetrically on either side of the opening of the assembly hole 3" for the control spindle 6 of said bearing element 3, 3' and, on the other hand, two peripheral material extensions 12 and 12' defining two annular support shoulder or flange portions with the body of the bearing 7 of the bearing element 3, 3' concerned.

With the aid of the aforementioned arrangements, a rigid assembly of the four constituent parts of the regulation device 1 is achieved, the fitting with locking in rotation of the bearing elements 3 and 3' and of the shutter body 5 on the control spindle 6 being doubled by the partial lateral nesting of said shutter body 5 in the grooves 9 of the bearing elements 3 and 3'. Thus, said shutter body 5 forms with said bearing elements 3 and 3' a structural unit and an improved seal is achieved both in the fluid flow direction and in the direction of the control spindle 6 (in the region of the bearing housing orifices 4 and 4').

Moreover, the support heads 8 of the two bearing elements 3 and 3 provide axial adjustment thereof, and of the shutter body 5.

Preferably, and with a view to allowing easy introduction of the shutter body by continuous lateral guiding, the bottom of the groove 9 forming a runner of each bearing element 3, 3' is situated substantially in the plane containing the opening flange, opening into the conduit portion 2 of the housing orifice 4, 4' receiving this bearing element 3, 3'.

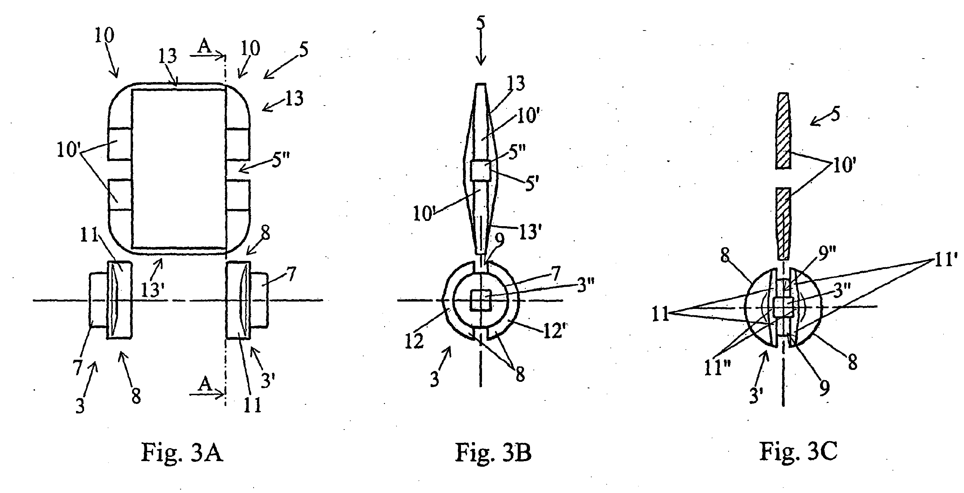

In addition, as shown more particularly in Fig. 3 of the accompanying drawings, the two pairs of wall portions 11, 11' delimiting the groove forming the runner 9 of each bearing element 3, 3' may be connected to each other by intermediate wall portions 11" defining between them a passage receiving the control spindle 6 tightly.

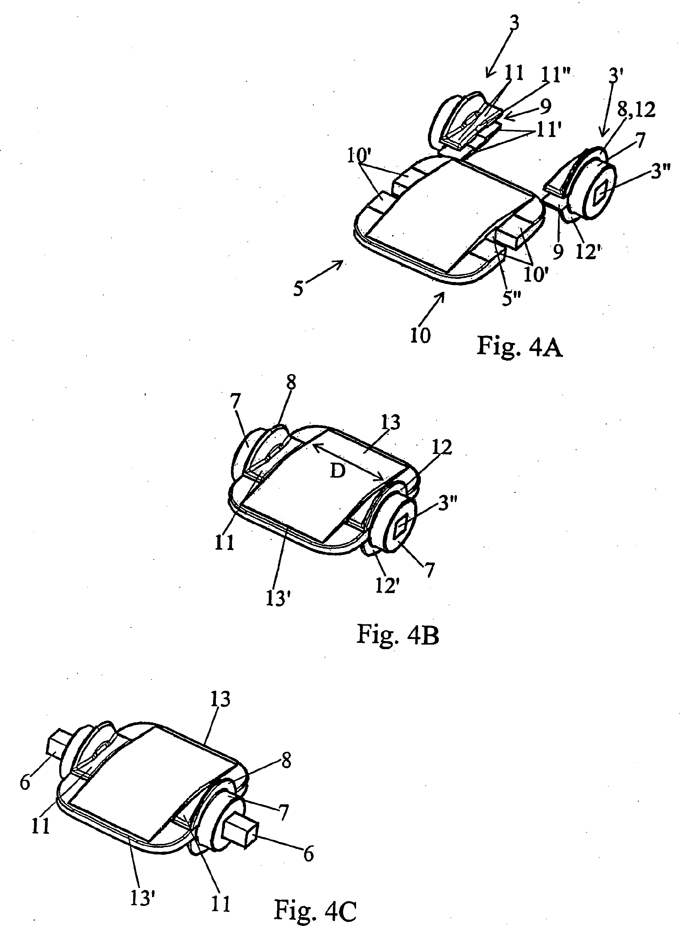

In addition, as shown in Fig. 4 of the accompanying drawings, in relation particularly with Fig. 1, the shutter body 5 comprises advantageously, on either side of the central tubular part 5', two coplanar wings 13 and 13' each extended by opposite side portions 10, in the same plane as each other and interrupted opposite facing openings of the central tubular part 5', which central tubular part has a length equal to the distance separating the tops of the support heads 8 of the two bearing elements 3 and 3'.

According to a preferred embodiment of the invention and as shown in Figs. 1 to 5 of the accompanying drawings, the walls or wall portions 11, 11' delimiting the groove forming a runner 9 of each bearing element 3, 3' have a free straight longitudinal edge and the coplanar wings 13 and 13' of the shutter body 5 have a thickness greater than the width of said grooves forming runners 9 and a dimension D that is constant in the longitudinal or axial direction of the central tubular part 5' or defining a tubular passage 5", this dimension D being equal to the length thereof and to the distance separating said free longitudinal edges of the support heads 8 of the two opposing bearing elements 3 and 3'.

These arrangements guarantee additional fitting of the shutter body 5 in the bearing elements 3 and 3', and its precise guiding when it is introduced into the grooves 9 of the support heads 8 of said bearing elements, during fitting and assembly of the regulation device 1.

The two coplanar wings 13 and 13' may be formed in a single piece with the sides by injection moulding in thermoplastic material(s) and the shutter body 5 may have a lens-shaped profile in section in the region of said wings 13, 13' (Fig. 3B).

To retain the shutter body 5 in the grooves 9 before putting in place the control spindle 6 and to allow the operator putting said shutter body in place by translation in said grooves to easily determine the coinciding fitting position, provision can be made for the parts 10' of the side portions 10 of the shutter body 5 situated in the grooves forming runners 9 of the two opposite bearing elements 3 and 3' are less thick than the remaining parts of said side portions 10 situated outside said grooves 9.

The sum of the thickness of the parts 10' and the thickness of the walls or elastically deformable wall portions 11 and 11' may be equal to the thickness of the remaining aforementioned parts of the side portions 10, so as to present a planar surface to the fluid flow in the most open position of the shutter body 5.

Of course, a person skilled in the art will understand that the various arrangements and characteristics of the invention described above can be applied to shutter bodies 5 and conduit portion sections 2 of different shapes, for example circular, elliptical, square, rectangular or other.

Advantageously, however, the section of the conduit portion 2 and the contour of the shutter body 5 are rectangular in shape with rounded corners.

In addition, although the invention has been described thus far in relation to a single regulation device 1 and a single conduit portion 2, a person skilled in the art will understand that it can easily be applied to assemblies or groupings of at least two regulation devices 1, arranged consecutively in a same conduit portion 2 or in different, or even separate conduit portions 2.

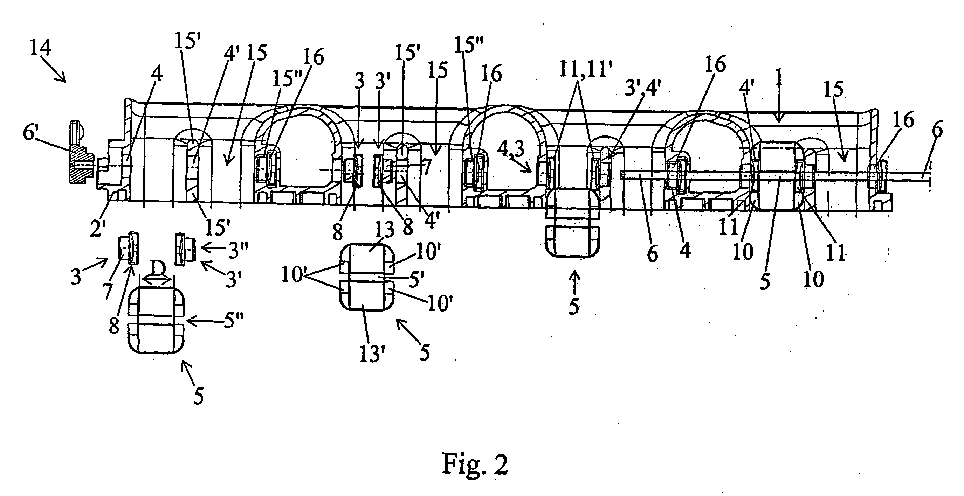

According to a very beneficial embodiment of the regulation device 1, illustrated in Figs. 2 and 5 to 7 of the accompanying drawings, said regulation device is mounted in a multi-way part 14 incorporating a plurality of adjacent conduit portions 2 each of which comprises a regulation device 1 according to any one of claims 1 to 8, these devices 1 being aligned with each other and comprising the same control spindle 6 for their assembly and mechanical control in rotation.

The present invention also concerns, as shown in Figs. 2 and 5 to 8 of the accompanying drawings, a multi-way part 14 forming part of a system for circulation and/or distribution of fluid, in particular a gaseous fluid, incorporating at least two, and preferably at least four conduit portions 2.

This part 14 is characterised in that each of said conduit portions 2 comprises a regulation device 1 as described above, these regulation devices 1 being aligned with each other and the bearing elements 3, 3' and the shutter bodies 5 of the various regulation devices 1 all being mounted on and traversed by the same control spindle 6 to which they are secured in rotation.

Provision can be made, as the aforementioned figures show, for each of the conduit portions 2 equipped with a regulation device 1 to be arranged in a pair with an adjacent conduit portion 15 that does not comprise a regulation device 1 and with which it has a common wall part 15'. The two types of conduit portion 2 and 15 of each of the pairs of conduit portion 2 and 15 thus define twinned flow passages, one of which is regulated and the other not and that have a common inlet opening and/or outlet opening.

With a view to achieving a substantially planar construction of the multi-port part 14, provision can also be made for the twinned adjacent and unregulated conduit portions 15 to either also be aligned with the conduit portions 2 equipped with regulation devices 1, or traversed by the single control spindle 6 and they each comprise a housing orifice 15" receiving a bearing element 16 for said spindle 6 and situated facing the traversing housing orifice 4' arranged in the wall part 15' common with the corresponding twinned conduit portion 15.

According to a very advantageous embodiment of the invention, the multi-way part 14 is produced in a single piece by injection moulding of thermoplastic material, possibly reinforced, and consists of a part 14 to be inserted in or attached to an inlet distributor or manifold 17, producing a seal in the regions of the areas in contact, the conduit portions 2, 15 of said part 14 forming the tubes or parts of the tubes of said manifold or distributor 17.

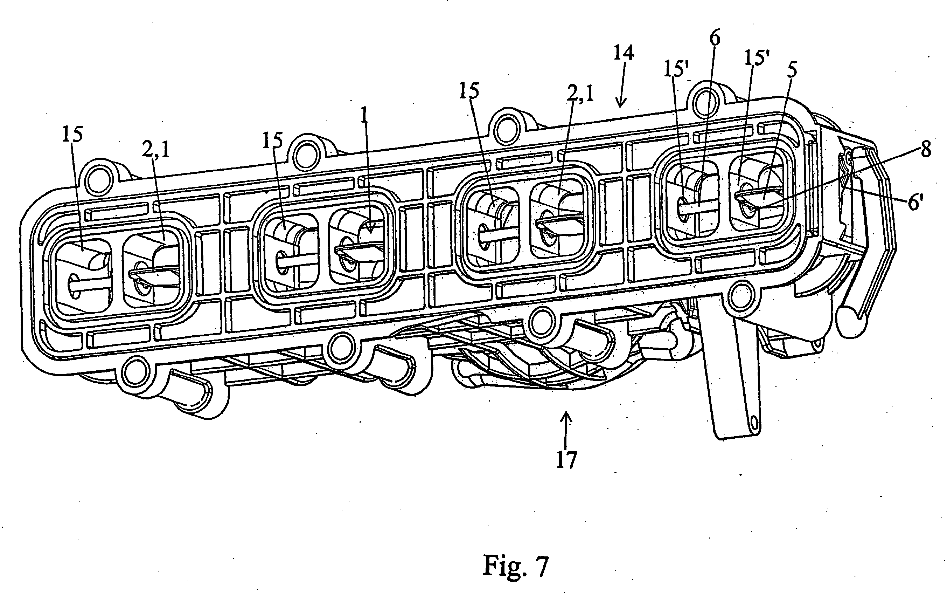

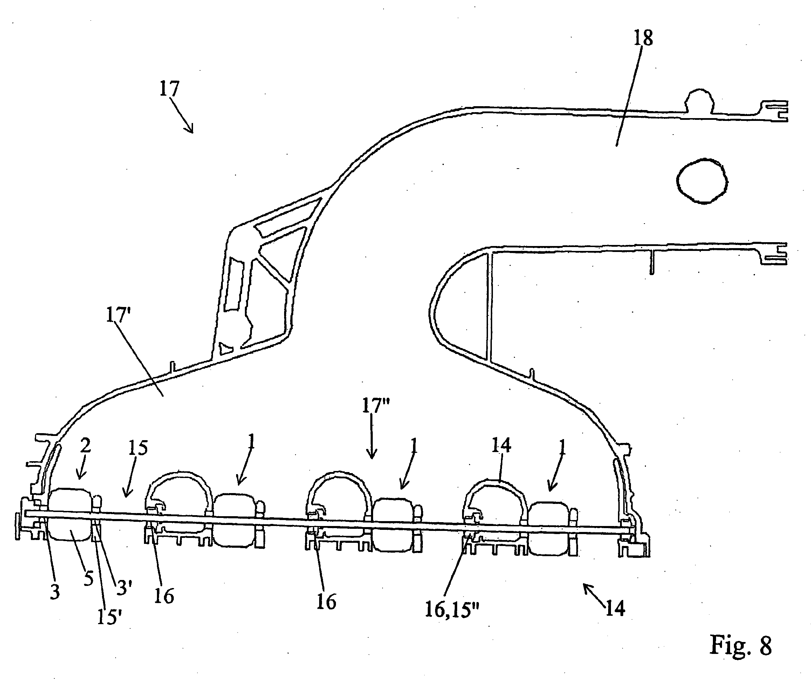

The invention also relates, as shown in Figs. 7 and 8 of the accompanying drawings, to an inlet distributor or manifold 17 comprising an inlet or supply conduit 18, a principal chamber or plenum 17' and a plurality of outlet tubes, characterised in that said tubes or parts thereof 2, 15 form part of a multi-way part 14 of the type described above, attached by partial nesting in the region of a corresponding opening 17" of the principal chamber 17', preferably opposite the supply conduit 18.

Finally, the invention also relates to a process for producing at least one shutter-type flow regulation device 1 in a conduit portion 2.

This process is characterised in that it consists of providing at least one conduit portion 2 provided with two opposing orifices 4, 4' for receiving bearings, of putting in place, preferably simultaneously, in each of said orifices 4, 4' a bearing element having a first part 7 forming a bearing body suitable for tightly fitted mounting and with the ability to rotate in the orifice 4, 4' concerned and a second part 8 forming a support head adapted to come in contact with and rest against the internal face of the wall 2' of said conduit portion 2 round the housing orifice 4, 4' concerned, the two parts 7 and 8 of each aforementioned element 3, 3' being produced in a single piece and traversed by a passage orifice or hole 3" of non-circular section and the second part 8 having a traversing groove 9 forming a planar runner, of then introducing into the or each conduit portion 2 a generally planar shutter body comprising a central tubular part 5', of then inserting said shutter body 5, by opposite side portions 10, into the grooves forming runners 9 of the support heads 8 of the two bearing elements 3 and 3' previously put in place, said grooves 9 being arranged in the same plane as each other, until the passages or holes 3", 5" of identical non-circular section of the bearing elements 3, 3' and of said central tubular part 5' are aligned, and finally of introducing axially in said aligned passages 3", 5", a control spindle 6 of corresponding non-circular section.

This spindle 6 is then made integral, for example by nesting, with a device for operating in rotation, for example of the link spindle 6' type.

According to an advantageous embodiment of the invention, that allows a plurality of regulation devices 1 to be achieved, the process may consist of repeating the operations of putting in place bearing elements 3, 3' and inserting shutter bodies 5 with alignment of their mutual traversing passages 3", 5" for a plurality of conduit portions 2, and, after these operations are complete, of introducing a single control spindle 6 through all the assemblies [bearing elements 3, 3' / shutter bodies 5] previously produced and arranged in alignment.

Advantageously, the side portions 10 of each shutter body 5 may have less thick parts 10', which meet in the grooves 9 of the support heads 8 of the bearing elements 3, 3' concerned when the passages or holes 3", 5" of non-circular section of said bearing elements 3, 3' and of the central tubular part 5' of said shutter body 5 are aligned and coincide, said shutter body 5 thus being held in these grooves even before the introduction through them of the control spindle 6.

Preferably, the different conduit portions 2 belong to the same multi-way part 14 produced in a single piece by injection moulding, for example as described above.

This multi-way part 14 may also comprise conduit portions 15 not provided with a regulation device 1 and traversed by the control spindle 6, these conduit portions 15 each comprising a bearing element 16 mounted in a reception housing 15" arranged in the walls of these conduit portions 15.

Of course, the invention is not limited to the embodiment described and illustrated in the accompanying drawings. Modifications are possible, particularly from the point of view of the construction of the various elements or by substitution of technical equivalents, without thereby departing from the scope of protection of the invention according to the claims.

## Claims

1. Device (1) for regulating fluid flow in a conduit portion (2) basically consisting, on the one hand, of two bearings (3,3') formed or fitted in two opposing housing orifices (4,4') arranged in the wall (2') of said conduit portion (2), on the other of a generally planar pivoting shutter body (5) mounted between said two bearings (3,3') and capable of closing the passage of the conduit portion (2) and, finally, of a control spindle (6) of non-circular section traversing the two bearings (3,3') and on which the shutter body (5) is fitted by a central tubular part (5'); wherein each bearing consists of a bearing element (3, 3') in a single piece which comprises a first part (7) forming the bearing body and fitted tightly with the ability to rotate in one of the housing orifices (4, 4') and a second part (8)
having a traversing groove (9) forming a planar runner, and wherein the shutter body (5) is assembled with the two opposite bearing elements (3 and 3') by the engagement of parts (10') of the opposite sides (10) in the grooves (9) forming runners of the support heads (8) of these two bearing elements (3 and 3'), said assembly being locked by the control spindle (6) traversing them, regulation device (1) **characterised in that** the second part (8) of each bearing element (3,3') is forming a support head situated in the conduit portion (2), resting against the internal face of the wall (2') thereof round the housing orifice (4,4') concerned and **in that** the support head (8) of each bearing element (3, 3') comprises, on the one hand, two walls or two pairs of wall portions (11, 11') defining, between them, two straight aligned groove parts (9, 9") forming the runner and situated symmetrically on either side of the opening of an assembly hole (3") for the control spindle (6) of said bearing element (3, 3') and, on the other hand, two peripheral material extensions (12 and 12') defining two annular support shoulder or flange portions with the body of the bearing (7) of the bearing element (3, 3') concerned.

2. Regulation device according to claim, **characterised in that** the bottom of the groove (9) forming a runner of each bearing element (3, 3') is situated substantially in the plane containing the opening flange, opening into the conduit portion (2) of the housing orifice (4, 4') receiving this bearing element (3, 3').

3. Regulation device according to any one of claims 1 and 2, **characterised in that** the two pairs of wall portions (11, 11') delimiting the groove forming the runner (9) of each bearing element (3, 3') are connected to each other by intermediate wall portions (11") defining between them a passage receiving the control spindle (6) tightly.

4. Regulation device according to any one of claims 1 to 3, **characterised in that** the shutter body (5) comprises, on either side of the central tubular part (5'), two coplanar wings (13 and 13') each extended by opposite side portions (10), in the same plane as each other and interrupted opposite facing openings of the central tubular part (5'), which central tubular part has a length equal to the distance separating the tops of the support heads (8) of the two bearing elements (3 and 3').

5. Regulation device according to claim 4, when appended to any one of claims 2 to 4, **characterised in that** the walls or wall portions (11, 11') delimiting the groove forming a runner (9) of each bearing element (3, 3') have a free straight longitudinal edge and **in that** the coplanar wings (13 and 13') of the shutter body (5) have a thickness greater than the width of said grooves forming runners (9) and a dimension (D) that is constant in the longitudinal or axial direction of the central tubular part (5'), this dimension (D) being equal to the length thereof and to the distance separating said free longitudinal edges of the support heads (8) of the two opposing bearing elements (3 and 3').

6. Regulation device according to any one of claims 1 to 5, **characterised in that** the parts (10') of the side portions (10) of the shutter body (5) situated in the grooves forming runners (9) of the two opposite bearing elements (3 and 3') are less thick than the remaining parts of said side portions (10) situated outside said grooves (9).

7. Regulation device according to any one of claims 1 to 6, **characterised in that** the section of the conduit portion (2) and the contour of the shutter body (5) are rectangular in shape with rounded corners.

8. Regulation device according to any one of claims 1 to 7, **characterised in that** it is mounted in a multi-way part (14) incorporating a plurality of adjacent conduit portions (2) each of which comprises a regulation device (1) according any one of claims 1 to 8, these devices (1) being aligned with each other and comprising the same control spindle (6) for their assembly and mechanical control in rotation.

9. Multi-way part forming part of a system for circulation and/or distribution of a fluid, particularly a gaseous fluid, incorporating at least two, and preferably at least four conduit portions, the part (14) being **characterised in that** each of said conduit portions (2) comprises a regulation device (1) according to any one of claims 1 to 8, these regulation devices (1) being aligned with each other and the bearing elements (3, 3') and the shutter bodies (5) of the various regulation devices (1) all being mounted on and traversed by the same control spindle (6) to which they are secured in rotation.

10. Part according to claim 9, **characterised in that** each of the conduit portions (2) equipped with a regulation device (1) is arranged in a pair with an adjacent conduit portion (15) that does not comprise a regulation device (1) and with which it has a common wall part (15').

11. Part according to claim 10, **characterised in that** the twinned adjacent and unregulated conduit portions (15) are also aligned with the conduit portions (2) equipped with regulation devices (1), are traversed by the single control spindle (6) and each comprise a housing orifice (15") receiving a bearing element (16) for said spindle (6) and situated facing the traversing housing orifice (4') arranged in the wall part (15') common with the corresponding twinned conduit portion (15).

12. Part according to any one of claims 10 to 12, **characterised in that** it is produced in a single piece by injection moulding of thermoplastic material, possibly reinforced, and consists of a part (14) to be inserted in or attached to an inlet distributor or manifold (17), producing a seal in the regions of the areas in contact, the conduit portions (2, 15) of said part (14) forming the tubes or parts of the tubes of said manifold or distributor (17).

13. Inlet distributor or manifold comprising an inlet or supply conduit, a principal chamber or plenum and a plurality of outlet tubes, **characterised in that** said tubes or parts thereof (2, 15) form part of a multi-way part (14) according to any one of claims 9 to 12, attached by partial nesting in the region of a corresponding opening (17") of the principal chamber (17'), preferably opposite the supply conduit (18).

14. process for producing at least at least one shutter-type flow regulation device in a conduit portion, according to any one of claims 1 to 8, wherein said process consists of providing at least one conduit portion (2) provided with two opposing orifices (4, 4') for receiving bearings, of putting in place, preferably simultaneously, in each of said orifices (4, 4') a bearing element (3, 3') having a first part (7) forming a bearing body suitable for tightly fitted mounting and with the ability to rotate in the orifice (4, 4') concerned and a second part (8) forming a support head adapted to come in contact with and rest against the internal face of the wall (2') of said conduit portion (2) round the housing orifice (4, 4') concerned, the two parts (7 and 8) of each aforementioned element (3, 3') being produced in a single piece and traversed by a passage orifice or hole (3") of non-circular section and the second part (8) having a traversing groove (9) forming a planar runner, whereas the support head (8) of each bearing element (3, 3') comprises, on the one hand, two walls or two pairs of wall portions (11, 11') defining, between them, two straight aligned groove parts (9, 9") forming the runner and situated symmetrically on either side of the opening of the assembly hole (3") for the control spindle (6) of said bearing element (3, 3') and, on the other hand, two peripheral material extensions (12 and 12') defining two annular support shoulder or flange portions with the body of the bearing (7) of the bearing element (3, 3') concerned, of then introducing into the or each conduit portion (2) a generally planar shutter body (5) comprising a central tubular part (5'), of then inserting said shutter body (5), by opposite side portions (10), into the grooves forming runners (9) of the support heads (8) of the two bearing elements (3 and 3') previously put in place, said grooves (9) being arranged in the same plane as each other, until the passages or holes (3", 5") of identical non-circular section of the bearing elements (3, 3') and of said central tubular part (5') are aligned, and finally of introducing axially in said aligned passages (3", 5"), a control spindle (6) of corresponding non-circular section.

15. Process according to claim 14, **characterised in that** it consists of repeating the operations of putting in place bearing elements (3, 3') and inserting shutter bodies (5) with alignment of their mutual traversing passages (3", 5") for a plurality of conduit portions (2), and, after these operations are complete, of introducing a single control spindle (6) through all the assemblies of bearing elements (3, 3') / shutter bodies (5) previously produced and arranged in alignment.

16. Process according to any one of claims 14 and 15, **characterised in that** the side portions (10) of each shutter body (5) have less thick parts (10'), which meet in the grooves (9) of the support heads (8) of the bearing elements (3, 3') concerned when the passages or holes (3", 5") of non-circular section of said bearing elements (3, 3') and of the central tubular part (5') of said shutter body (5) are aligned and coincide, said shutter body (5) being then held in these grooves even before the introduction through them of the control spindle (6).

17. Process according to any one of claims 15 and 16, **characterised in that** the different conduit portions (2) belong to the same multi-way part (14) produced in a single piece by injection moulding.

18. Process according to claim 17, **characterised in that** multi-way part (14) also comprises conduit portions (15) not provided with a regulation device (1) and traversed by the control spindle (6), these conduit portions (15) each comprising a bearing element (16) mounted in a reception housing (15") arranged in the walls of these conduit portions (15).

19. Process according to any one of claims 17 and 18, **characterised in that** the multi-way part (14) is a part according to any one of claims 10 to 13.

## Patentansprüche

1. Gerät (1) zum Regulieren des Fluidstroms in einem Leitungsabschnitt (2), grundsätzlich bestehend einerseits aus zwei Lagern (3, 3'), die in zwei gegenüberliegenden Gehäuseöffnungen (4, 4') ausgebildet oder darin eingepasst sind, welche in der Wand (2') des Leitungsabschnitts (2) angeordnet sind, andererseits aus einem im Allgemeinen planen, schwenkbaren Klappenkörper (5), der zwischen den zwei Lagern (3, 3') angebracht ist und imstande ist, den Durchgang des Leitungsabschnitts (2) zu schließen, und schließlich aus einer Steuerspindel (6) mit nichtkreisförmigem Schnitt, die die zwei Lager (3, 3') durchquert und an der der Klappenkörper (5) durch ein mittleres röhrenförmiges Teil (5') angepasst ist, wobei jedes Lager aus einem einstückigen Lagerelement (3, 3') besteht, das ein erstes Teil (7), das den Lagerkörper ausbildet und drehfähig eng in eine der Gehäuseöffnungen (4, 4') eingepasst ist, und ein zweites Teil (8) umfasst, das eine quer verlaufende Nut (9) aufweist, die eine plane Laufschiene ausbildet, und wobei der Klappenkörper (5) mit den zwei gegenüberliegenden Lagerelementen (3 und 3') durch die Ineingriffnahme von Teilen (10') der gegenüberliegenden Seiten (10) in die Nute (9) zusammengebaut ist, die Laufschienen der Stützköpfe (8) dieser zwei Lagerelemente (3 und 3') ausbilden, wobei der Zusammenbau durch die Steuerspindel (6) gesperrt ist, die ihn durchquert,
das Reguliergerät (1) **dadurch gekennzeichnet, dass** das zweite Teil (8) jeden Lagerelements (3, 3') einen Stützkopf ausbildet, der sich in dem Leitungsabschnitt (2) befindet und an der Innenfläche der Wand (2') um die betroffene Gehäuseöffnung (4, 4') ruht, und dass der Stützkopf (8) jeden Lagerelements (3, 3') einerseits zwei Wände oder zwei Paare von Wandabschnitten (11, 11'), die dazwischen zwei gerade, aneinander ausgerichtete Nutteile (9, 9'') definieren, die die Laufschiene ausbilden und sich symmetrisch auf jeder Seite der Öffnung eines Zusammenbaulochs (3'') für die Steuerspindel (6) des Lagerelements (3, 3') befinden, und andererseits zwei umfängliche Materialerweiterungen (12 und 12') umfasst, die zwei ringförmige Stützschulter- oder Flanschabschnitte mit dem Körper des Lagers (7) des betroffenen Lagerelements (3, 3') definieren.

2. Reguliergerät nach Anspruch 1, **dadurch gekennzeichnet, dass** sich die Unterseite der Nut (9), die eine Laufschiene jeden Lagerelements (3, 3') ausbildet, im Wesentlichen in der Ebene befindet, die den Öffnungsflansch enthält, der in den Leitungsabschnitt (2) der Gehäuseöffnung (4, 4') mündet, die das Lagerelement (3, 3') aufnimmt.

3. Reguliergerät nach einem der Ansprüche 1 und 2, **dadurch gekennzeichnet, dass** die zwei Paare von Wandabschnitten (11, 11'), die die Nut begrenzen, welche die Laufschiene (9) von jedem Lagerelement (3, 3') ausbildet, durch zwischenliegende Wandabschnitte (11'') miteinander verbunden sind, die dazwischen einen Durchgang definieren, der die Steuerspindel (6) eng aufnimmt.

4. Reguliergerät nach einem der Ansprüche 1 bis 3, **dadurch gekennzeichnet, dass** der Klappenkörper (5) auf jeder Seite des röhrenförmigen Körpers (5') zwei koplanare Flügel (13 und 13') umfasst, die jeder durch gegenüberliegende Seitenabschnitte (10) erweitert sind, in derselben Ebene miteinander und unterbrochen durch entgegengesetzt gerichtete Öffnungen des mittleren röhrenförmigen Teils (5'), wobei das mittlere röhrenförmige Teil eine Länge aufweist, die gleich dem Abstand ist, der die Oberseiten der Stützköpfe (8) der zwei Lagerelemente (3 und 3') trennt.

5. Reguliergerät nach Anspruch 4, wenn einem der Ansprüche 2 und 3 zugehörig, **dadurch gekennzeichnet, dass** die Wände oder Wandabschnitte (11, 11'), die die Nut begrenzen, welche eine Laufschiene (9) jeden Lagerelements (3, 3') ausbildet, eine freie gerade Längskante aufweisen, und dass die koplanaren Flügel (13 und 13') des Kappenkörpers (5) eine Stärke aufweisen, die größer als die Breite der Nute ist, die Laufschienen (9) ausbilden, und eine Abmessung (D), die konstant in der Längs- oder axialen Richtung des mittleren röhrenförmigen Teils (5') ist, wobei diese Abmessung (D) gleich der Länge davon und dem Abstand ist, der die freien Längskanten der Stützköpfe (8) der zwei gegenüberliegenden Lagerelemente (3 und 3') trennt.

6. Reguliergerät nach einem der Ansprüche 1 bis 5, **dadurch gekennzeichnet, dass** die Teile (10') der Seitenabschnitte (10) des Klappenkörpers (5), die sich in den Nuten befinden, welche Laufschienen (9) der zwei gegenüberliegenden Lagerelemente (3 und 3') ausbilden, weniger stark als die restlichen Teile der Seitenabschnitte (10) sind, die sich außerhalb der Nute (9) befinden.

7. Reguliergerät nach einem der Ansprüche 1 bis 6, **dadurch gekennzeichnet, dass** der Schnitt des Leitungsabschnitts (2) und die Kontur des Klappenkörpers (5) rechteckig mit abgerundeten Ecken sind.

8. Reguliergerät nach einem der Ansprüche 1 bis 7, **dadurch gekennzeichnet, dass** es in einem Mehrwegteil (14) angebracht ist, das mehrere benachbarte Leitungsabschnitte (2) eingliedert, die jeder ein Reguliergerät (1) nach einem der Ansprüche 1 bis 7 umfassen, wobei diese Geräte (1) aneinander ausgerichtet sind und dieselbe Steuerspindel (6) für ihren Zusammenbau und mechanische Drehsteuerung umfassen.

9. Mehrwegteil, das ein Teil eines Systems zum Umwälzen und/oder Verteilen eines Fluids, insbesondere eines gasförmigen Fluids, bildet und zumindest zwei und vorzugsweise zumindest vier Leitungsabschnitte eingliedert, wobei das Teil (14) **dadurch gekennzeichnet ist, dass** jeder der Leitungsabschnitte (2) ein Reguliergerät (1) nach einem der Ansprüche 1 bis 8 umfasst, wobei diese Reguliergeräte (1) aneinander ausgerichtet sind und die Lagerelemente (3, 3') und die Klappenkörper (5) der verschiedenen Reguliergeräte (1) alle an derselben Steuerspindel (6) angebracht und von ihr durchquert sind, an der sie drehfähig befestigt sind.

10. Teil nach Anspruch 9, **dadurch gekennzeichnet, dass** jeder der Leitungsabschnitte (2), der mit einem Reguliergerät (1) ausgestattet ist, in einem Paar mit einem benachbarten Leitungsabschnitt (15) angeordnet ist, der kein Reguliergerät (1) umfasst und mit dem er eine gemeinsame Seitenwand (15') aufweist.

11. Teil nach Anspruch 10, **dadurch gekennzeichnet, dass** die gepaarten benachbarten und nicht regulierten Leitungsabschnitte (15) ebenfalls an den Leitungsabschnitten (2) ausgerichtet sind, die mit den Reguliergeräten (1) ausgestattet sind, von der einzelnen Steuerspindel (6) durchquert sind und jeder eine Gehäuseöffnung (15") umfassen, die ein Lagerelement (16) für die Spindel (6) aufnimmt und der durchquerenden Gehäuseöffnung (4') zugekehrt angeordnet ist, die in dem Wandteil (15') angeordnet ist, der dem entsprechenden gepaarten Leitungsabschnitt (15) gemeinsam ist.

12. Teil nach einem der Ansprüche 10 und 11, **dadurch gekennzeichnet, dass** es einstückig durch Spritzgießen von thermoplastischem Kunststoff, möglicherweise verstärkt, erzeugt ist und aus einem Teil (14) besteht, das in einen Einlassverteiler oder eine Rohrverzweigung (17) eingeführt oder daran angebracht werden soll, wodurch eine Dichtung in den Bereichen der Kontaktflächen erzeugt ist, wobei die Leitungsabschnitte (2, 15) des Teils (14) die Rohre oder Teile der Rohre der Rohrverzweigung oder des Verteilers (17) ausbilden.

13. Einlassverteiler oder Rohrverzweigung, umfassend eine Einlass- oder Zufuhrleitung, eine Hauptkammer oder Sammelkammer und mehrere Auslassrohre, **dadurch gekennzeichnet, dass** die Rohre oder Teile davon (2, 15) ein Mehrwegteil (14) nach einem der Ansprüche 9 bis 12 ausbilden, das durch teilweise Schachtelung im Bereich einer entsprechenden Öffnung (17'') der Hauptkammer (17'), vorzugsweise gegenüber der Zufuhrleitung (18) angebracht ist.

14. Prozess zum Erzeugen von zumindest einem Klappenstromreguliergerät in einem Leitungsabschnitt nach einem der Ansprüche 1 bis 8, wobei der Prozess aus dem Vorsehen von zumindest einem Leitungsabschnitt (2), der mit zwei gegenüberliegenden Öffnungen (4, 4') zum Aufnehmen von Lagern versehen ist, aus dem vorzugsweise gleichzeitigen Einlegen eines Lagerelements (3, 3') in jede der Öffnungen (4, 4'), das ein erstes Teil (7), welches einen Lagerkörper ausbildet, der zur eng eingepassten Anbringung und mit der Fähigkeit zum Drehen in der betroffenen Öffnung (4, 4') geeignet ist, und ein zweites Teil (8) aufweist, das einen Stützkopf ausbildet, welcher dazu geeignet ist, mit der Innenfläche der Wand (2') des Leitungsabschnitts (2) um die betroffene Gehäuseöffnung (4, 4') in Kontakt zu kommen und daran zu ruhen, wobei die zwei Teile (7 und 8) einstückig erzeugt sind und von einer Durchgangsöffnung oder einem Durchgangsloch (3") mit nichtkreisförmigem Schnitt durchquert sind und das zweite Teil (8) eine quer verlaufende Nut (9) aufweist, die eine plane Laufschiene ausbildet, während der Stützkopf (8) jeden Lagerelements (3, 3') einerseits zwei Wände oder zwei Paare von Wandabschnitten (11, 11'), die dazwischen zwei gerade, aneinander ausgerichtete Nutteile (9, 9") definieren, die die Laufschiene ausbilden und sich symmetrisch auf jeder Seite der Öffnung des Zusammenbaulochs (3") für die Steuerspindel (6) des Lagerelements (3, 3') befinden, und andererseits zwei umfängliche Materialerweiterungen (12 und 12') umfasst, die zwei ringförmige Stützschulter- oder Flanschabschnitte mit dem Körper des Lagers (7) des betroffenen Lagerelements (3, 3') definieren, aus dem folgenden Einführen in den oder jeden Leitungsabschnitt (2) eines im Allgemeinen planen Klappenkörpers (5), der ein mittleres röhrenförmiges Teil (5') umfasst, aus dem folgenden Einfügen des Klappenkörpers (5) durch gegenüberliegende Seitenabschnitte (10) in die Nute, die Laufschienen (9) der Stützköpfe (8) der zwei Lagerelemente (3 und 3'), die vorher eingelegt wurden, ausbilden, wobei die Nute (9) in derselben Ebene miteinander angeordnet sind, bis die Durchgänge oder Löcher (3", 5") mit identischem nichtkreisförmigen Schnitt der Lagerelemente (3, 3') und des mittleren röhrenförmigen Teils (5') aneinander ausgerichtet sind, und schließlich aus dem axialen Einführen einer Steuerspindel (6) mit entsprechendem nichtkreisförmigen Schnitt in die ausgerichteten Durchgänge (3", 5"') besteht.

15. Prozess nach Anspruch 14, **dadurch gekennzeichnet, dass** er aus dem Wiederholen der Arbeitsvorgänge des Einlegens von Lagerelementen (3, 3') und Einführens von Klappenkörpern (5) mit Ausrichtung ihrer gegenseitigen durchquerenden Durchgänge (3", 5") für mehrere Leitungsöffnungen (2) und, nach der Beendigung dieser Arbeitsvorgänge, aus dem Einführung einer einzigen Steuerspindel (6) durch alle Zusammenbauten von Lagerelementen (3, 3')/Klappenkörper (5), die vorher erzeugt und in Ausrichtung aneinander angeordnet wurden, besteht.

16. Prozess nach einem der Ansprüche 14 und 15, **dadurch gekennzeichnet, dass** die Seitenabschnitte (10) jeden Klappenkörpers (5) weniger starke Teile (10') aufweisen, die in den Nuten (9) der Stützköpfe (8) der betroffenen Lagerelemente (3, 3') zusammentreffen, wenn die Durchgänge oder Löcher (3", 5") mit nichtkreisförmigem Schnitt der Lagerelemente (3, 3') und des mittleren röhrenförmigen Teils (5') des Klappenkörpers (5) aneinander ausgerichtet sind und miteinander übereinstimmen, wobei der Klappenkörper (5) dann in diesen Nuten sogar vor der Einführung der Steuerspindel (6) dort hindurch gehalten ist.

17. Prozess nach einem der Ansprüche 15 und 16, **dadurch gekennzeichnet, dass** die verschiedenen Leitungsabschnitte (2) zu demselben Mehrwegteil (14) gehören, das einstückig durch Spritzgießen erzeugt ist.

18. Prozess nach Anspruch 17, **dadurch gekennzeichnet, dass** das Mehrwegteil (14) außerdem Leitungsabschnitte (15) umfasst, die nicht mit einem Reguliergerät (1) versehen und von der Steuerspindel (6) durchquert sind, wobei diese Leitungsabschnitte (15) jeder ein Lagerelement (16) umfassen, das in einem Aufnahmegehäuse (15") angebracht ist, welches in den Wänden dieser Leitungsabschnitte (15) angeordnet ist.

19. Prozess nach einem der Ansprüche 17 und 18, **dadurch gekennzeichnet, dass** das Mehrwegteil (14) ein Teil nach einem der Ansprüche 10 bis 13 ist.

## Revendications

1. Dispositif (1) de régulation d'un flux de fluide dans une portion de conduit (2), essentiellement constitué, d'une part, par deux paliers (3, 3') formés ou montés dans deux orifices de logement opposés (4, 4') en regard ménagés dans la paroi (2') de ladite portion de conduit (2), d'autre part, par un corps de clapet pivotant (5) à structure générale plane monté entre lesdits deux paliers (3, 3') et apte à obturer le passage de la portion de conduit (2), et, enfin, par un axe de commande (6) à section non circulaire traversant les deux paliers (3, 3') et sur lequel le corps de clapet (5) est emmanché par une partie centrale tubulaire (5'),
chaque palier consistant en un élément de palier (3, 3') d'un seul tenant qui comporte une première partie (7) formant corps de palier et montée de manière ajustée et avec faculté de rotation dans un des orifices de logement (4, 4') et une seconde partie (8) présentant une rainure traversante (9) formant glissière à structure plane et,
ledit corps de clapet (5) étant assemblé avec les deux éléments de palier opposés (3 et 3') par l'engagement de parties (10') de portions de bords latéraux opposés (10) dans les rainures (9) formant glissières des têtes d'appui (8) de ces deux éléments de palier (3 et 3'), ledit axe (6) verrouillant l'assemblage du corps de clapet (5) avec les deux éléments de palier (3 et 3') en les traversant,
dispositif de régulation (1) **caractérisé en ce que** la seconde partie (8) de chaque élément de palier (3, 3') forme une tête d'appui située dans la portion de conduit (2), reposant contre la face interne de la paroi (2') de cette dernière autour de l'orifice de logement (4, 4') concerné,
et **en ce que** la tête d'appui (8) de chaque élément de palier (3, 3') comprend, d'une part, deux parois ou deux paires de portions de parois (11, 11') définissant, entre elles, deux parties de rainure rectilignes (9', 9") alignées formant la glissière et situées symétriquement de part et d'autre de l'ouverture d'une perforation de montage (3") pour l'axe de commande (6) dudit élément de palier (3, 3') et, d'autre part, deux prolongements matériels périphériques (12 et 12') définissant deux portions d'épaulement ou de rebord d'appui annulaire avec le corps de palier (7) de l'élément de palier (3, 3') considéré.

2. Dispositif de régulation selon la revendication 1, **caractérisé en ce que** le fond de la rainure (9) formant glissière de chaque élément de palier (3, 3') est situé sensiblement dans le plan contenant le rebord de l'ouverture, débouchant dans la portion de conduit (2), de l'orifice de logement (4, 4') recevant cet élément de palier (3, 3').

3. Dispositif de régulation selon l'une quelconque des revendications 1 et 2, **caractérisé en ce que** les deux paires de portions de parois (11, 11') délimitant la rainure formant glissière (9) de chaque élément de palier (3, 3') sont reliées entre elles par des portions de parois intermédiaires (11") définissant entre elles un passage recevant de manière ajustée l'axe de commande (6).

4. Dispositif de régulation selon l'une quelconque des revendications 1 à 3, **caractérisé en ce que** le corps de clapet (5) comprend, de part et d'autre de la partie centrale tubulaire (5'), deux ailes coplanaires (13 et 13') prolongées chacune par les portions de bords latéraux opposés (10), mutuellement coplanaires et interrompues en regard des ouvertures opposées de la partie centrale tubulaire (5'), cette dernière présentant une longueur égale à la distance séparant les sommets des têtes d'appui (8) des deux éléments de palier (3 et 3').

5. Dispositif de régulation selon la revendication 4, pour autant qu'elle se rattache à l'une quelconque des revendications 2 et 3, **caractérisé en ce que** les parois ou portions de parois (11 11') délimitant la rainure formant glissière (9) de chaque élément de palier (3, 3') présentent un bord longitudinal libre rectiligne et **en ce que** les ailes coplanaires (13 et 13') du corps de clapet (5) présentent une épaisseur supérieure à la largeur desdites rainures formant glissières (9) et une dimension (D) constante dans la direction longitudinale ou axiale de la partie centrale tubulaire (5'), cette dimension (D) étant égale à la longueur de cette dernière et à la distance séparant lesdits bords longitudinaux libres des têtes d'appui (8) des deux éléments de paliers (3 et 3') en regard.

6. Dispositif de régulation selon l'une quelconque des revendications 1 à 5, **caractérisé en ce que** les parties (10') des portions de bords latéraux (10) du corps de clapet (5) situées dans les rainures formant glissières (9) des deux éléments de paliers opposés (3 et 3') présentent une épaisseur plus faible que les parties restantes desdites portions de bords latéraux (10) situées en dehors desdites rainures (9).

7. Dispositif de régulation selon l'une quelconque des revendications 1 à 6, **caractérisé en ce que** la section de la portion de conduit (2) et le contour du corps de clapet (5) présentent une forme rectangulaire avec des coins arrondis.

8. Dispositif de régulation selon l'une quelconque des revendications 1 à 7, **caractérisé en ce qu'**il est monté dans une pièce multicanaux (14) intégrant plusieurs portions de conduits (2) voisins dont chacune comporte un dispositif de régulation (1) selon l'une quelconque des revendications 1 à 7, ces dispositifs (1) étant alignés entre eux et comportant un même axe de commande (6) assurant leur assemblage et les asservissant mécaniquement en rotation.

9. Pièce multicanaux faisant partie d'un système de circulation et/ou de distribution de fluide, en particulier gazeux, intégrant au moins deux, préférentiellement au moins quatre, portions de conduit, pièce (14) **caractérisée en ce que** chacune desdites portions de conduits (2) comporte un dispositif de régulation (1) selon l'une quelconque des revendications 1 à 8, ces dispositifs de régulation (1) étant alignés entre eux et les éléments de palier (3, 3') et les corps de clapet (5) de ces différents dispositifs de régulation (1) étant tous montés sur et traversés par un même axe de commande (6) avec lequel ils sont assujettis en rotation.

10. Pièce selon la revendication 9, **caractérisé en ce que** chacune des portions de conduits (2) munies d'un dispositif de régulation (1) est jumelée avec une portion de conduit (15) adjacente qui ne comporte pas de dispositif de régulation (1) et avec laquelle elle présente une partie de paroi commune (15').

11. Pièce selon la revendication 10, **caractérisé en ce que** les portions de conduits (15) jumelées, adjacentes et non régulées sont également alignées avec les portions de conduits (2) pourvues de dispositifs de régulation (1), sont traversées par l'axe de commande unique (6) et comportent chacune un orifice de logement (15") recevant un élément de palier (16) pour ledit axe (6) et situé en regard de l'orifice de logement (4') traversant ménagée dans la partie de paroi commune (15') avec la portion de conduit jumelée (15) correspondante.

12. Pièce selon l'une quelconque des revendications 10 et 11, **caractérisé en ce qu'**elle est réalisée d'un seul tenant par moulage par injection de matière thermoplastique, éventuellement chargée, et consiste en une pièce (14) à insérer dans ou à rapporter sur, avec réalisation d'une étanchéité au niveau des zones en contact, un répartiteur ou collecteur d'admission (17), les portions de conduits (2, 15) de ladite pièce (14) formant les tubulures ou des parties des tubulures dudit collecteur ou répartiteur (17).

13. Répartiteur ou collecteur d'admission comprenant un conduit d'admission ou d'alimentation, une chambre principale ou plénum et une pluralité de tubulures de sortie, **caractérisé en ce que** lesdites tubulures ou parties de ces dernières (2, 15) font partie d'une pièce multicanaux (14) selon l'une quelconque des revendications 9 à 12, rapportée par emboîtement partiel au niveau d'une ouverture (17") correspondante de la chambre principale (17'), préférentiellement à l'opposée du conduit d'alimentation (18).

14. Procédé de réalisation d'au moins un dispositif de régulation de flux à clapet dans une portion de conduit, selon l'une quelconque des revendications 1 à 8, ledit procédé consistant :
à fournir au moins une portion de conduit (2) pourvue de deux orifices opposés (4, 4') en regard pour la réception de paliers, à mettre en place, préférentiellement simultanément, dans chacun desdits orifices (4, 4') un élément de palier (3, 3') présentant une première partie (7) formant corps de palier adaptée pour être montée de manière ajustée et avec faculté de rotation dans l'orifice (4, 4') concerné et une seconde partie (8) formant tête d'appui adaptée pour venir en contact avec et reposer contre la face interne de la paroi (2') de ladite portion de conduit (2) autour de l'orifice de logement (4, 4') concerné, les deux parties (7 et 8) de chaque élément (3, 3') précitées étant réalisées d'un seul tenant et traversées par un orifice de passage ou une perforation (3") à section non circulaire et la seconde partie (8) présentant une rainure (9) traversante formant glissière à structure plane dans lequel la tête d'appui (8) de chaque élément de palier (3, 3') comprend, d'une part, deux parois ou deux paires de portions de parois (11, 11') définissant, entre elles, deux parties de rainure rectilignes (9', 9") alignées formant la glissière et situées symétriquement de part et d'autre de l'ouverture d'une perforation de montage (3") pour l'axe de commande (6) dudit élément de palier (3, 3') et, d'autre part, deux prolongements matériels périphériques (12 et 12') définissant deux portions d'épaulement ou de rebord d'appui annulaire avec le corps de palier (7) de l'élément de palier (3, 3') considéré,
à introduire ensuite dans la ou chaque portion de conduit (2) un corps de clapet (5) à structure générale plan et comprenant une partie centrale tubulaire (5'),
puis à insérer ledit corps de clapet (5), par des portions de bords latéraux opposés (10), dans les rainures formant glissières (9) des têtes d'appui (8) des deux éléments de paliers (3 et 3') mis en place précédemment, lesdites rainures (9) étant disposées mutuellement coplanairement, ce jusqu'à ce que les passages ou perforations (3", 5") à section identique non circulaire des éléments de paliers (3, 3') et de ladite partie centrale tubulaire (5') soient alignés, et
enfin à introduire axialement dans lesdits passages alignés (3", 5") un axe de commande (6) à section non circulaire correspondante.

15. Procédé selon la revendication 14, **caractérisé en ce qu'**il consiste à répéter les opérations de mise en place d'éléments de paliers (3, 3') et d'insertion des corps de clapets (5) avec alignement de leurs passages traversants mutuels (3", 5") pour plusieurs portions de conduit (2), et, après achèvement de ces opérations, à introduire un unique axe de commande (6) à travers tous les ensembles [éléments de paliers (3, 3')/corps de clapet (5)] réalisés préalablement et disposés de manière alignée.

16. Procédé selon l'une quelconque des revendications 14 et 15, **caractérisé en ce que** les portions de bords latéraux (10) de chaque corps de clapet (5) présentent des parties (10') de plus faible épaisseur, qui se retrouvent dans les rainures (9) des têtes d'appui (8) des éléments de palier (3, 3') concernés lorsque les passages ou perforation (3", 5") à section non circulaire desdits éléments de paliers (3, 3') et de la partie centrale tubulaire (5') dudit corps de clapet (5) sont alignés et coïncidants, ledit corps de clapet (5) étant alors maintenu dans ces rainures avant même l'introduction de l'axe de commande (6) à travers eux.

17. Procédé selon l'une quelconque des revendications 15 et 16, **caractérisé en ce que** les différentes portions de conduits (2) appartiennent à une même pièce multicanaux (14) réalisée d'un seul tenant par moulage par injection.

18. Procédé selon la revendication 17, **caractérisé en ce que** la pièce multicanaux (14) comporte également des portions de conduits (15) dépourvues de dispositif de régulation (1) et traversées par l'axe de commande (6), ces portions de conduits (15) comprenant chacune un élément de palier (16) monté dans un logement de réception (15") ménagée dans les parois de ces portions de conduits (15).

19. Procédé selon l'une quelconque des revendications 17 et 18, **caractérisé en ce que** la pièce multicanaux (14) est une pièce selon l'une quelconque des revendications 10 à 13.
